# EUROPÄISCHE PATENTANMELDUNG

(11) **EP 4 722 092 A1**
(43) Veröffentlichungstag der Anmeldung: **08.04.2026**
(21) Anmeldenummer: 25198150.2
(22) Anmeldetag: 26.08.2025
(51) Int. Cl.: B62K 27/00, G08G 1/054

(54) **TRANSPORTBOX, TRANSPORTFAHRRAD UND VERFAHREN**

(30) Priorität: 27.08.2024 DE 102024124388
(71) Anmelder: Jenoptik Robot GmbH, 40789 Monheim (DE)
(72) Erfinder: Boz, Enes, 40789 Monheim am Rhein (DE); Neugebauer, Frank, 40789 Monheim am Rhein (DE)
(74) Vertreter: Waldauf, Alexander

(57) **Zusammenfassung**

Die Erfindung betrifft eine Transportbox (100) zur Überwachung von Verkehrsszenen und/oder zur Sicherheitsüberwachung, aufweisend:
- eine Befestigungsvorrichtung (20), über welche die Transportbox (100) an einem Transportfahrrad (200) anordenbar ist,
- ein Gehäuse (10) umfassend zumindest eine Messeinheit (12, 12.1, 12.2), welche eingerichtet ist zum Messen (130) zumindest eines Parameters, welcher spezifisch ist für ein überwachtes Objekt (1),
- zumindest ein, bevorzugt drei Standfüße (30), durch welche die Transportbox (100) auf einem darunterliegenden Boden (2) abstützbar ist, wobei die Standfüße (30) an dem Gehäuse (10) angeordnet sind.

Weiterhin betrifft die Erfindung ein entsprechendes Transportfahrrad (200) und ein Verfahren.

## Beschreibung

Die Erfindung betrifft eine Transportbox zur Überwachung von Verkehrsszenen und/oder zur Sicherheitsüberwachung, ein entsprechendes Transportfahrrad sowie ein Verfahren.

Bekannt sind Vorrichtungen zur Überwachung von Verkehrsszenen, welche beispielsweise am Fahrbahnrand aufgestellt werden können, um einen Parameter (z.B. Geschwindigkeit und/oder Abstand) von Objekten, insbesondere von vorbeifahrenden Fahrzeugen, zu messen.

Dabei weisen bekannte Vorrichtungen aus dem Stand der Technik Nachteile auf. So können diese ungeschützt sein, und insbesondere äußerer Krafteinwirkung (z.B. Unfälle, Vandalismus) ausgesetzt sein. Zudem können diese auch (zu) leicht erkennbar sein. Weiterhin ist eine Flexibilität bezüglich der überwachten Richtung nicht ausreichend, insbesondere kann beispielsweise Vandalismus (mangels Kamerawinkel bzw. wegen totem Winkel) nicht verhindert und/oder aufgeklärt werden. Auch ein Wechsel einer Richtung, in welcher ein Messen z.B. der Geschwindigkeit erfolgen kann, ist nicht (oder nur händisch) änderbar. Zudem kann der Transport, der Aufbau und/oder der Aufbau mechanisch und/oder zeitlich aufwendig sein, was insbesondere die Kosten erhöhen kann. Demnach kann auch die Flexibilität und/oder der Komfort, insbesondere aufgrund von komplexen Bauteilen und/oder notwendigen konstruktiven Maßnahmen (beim Auf- und/oder Abbau) reduziert sein. Der Transport wird dabei häufig durch motorbetriebene Fahrzeuge, insbesondere mit Verbrennungsmotor, durchgeführt. Dies kann die Umweltfreundlichkeit reduzieren. Dies kann bedeuten, dass in bestimmten Bereichen, z.B. Fußgängerzonen, kein oder nur eingeschränkter Transport (und damit möglicherweise eine Verwendung) möglich ist.

Bei Mess-PKW und Anhängern ist ein weiterer Nachteil, dass diese durch den fließenden Verkehr zum Messstandort gelangen müssen. Staus und Hindernisse können hier nur schwer umfahren werden. Häufig sind nur sehr enge Messplätze zwischen parkenden Autos vorhanden.

Es ist daher eine Aufgabe der vorliegenden Erfindung, wenigstens einen der voranstehend beschriebenen Nachteile zumindest teilweise zu überwinden. Insbesondere ist es Aufgabe der Erfindung, Transport, Robustheit, Sicherheit, Flexibilität, Komfort, Kosten (staatl. Förderungen), Umweltfreundlichkeit und/oder Erkennbarkeit zu optimieren.

Die voranstehende Aufgabe wird gelöst durch eine Transportbox mit den Merkmalen des unabhängigen Patentanspruchs betreffend eine Transportbox, durch ein Transportfahrrad mit den Merkmalen des unabhängigen Patentanspruchs betreffend ein Transportfahrrad sowie durch ein Verfahren mit den Merkmalen des unabhängigen Verfahrensanspruchs. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Transportbox beschrieben sind, selbstverständlich auch im Zusammenhang mit dem erfindungsgemäßen Transportfahrrad und/oder im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann. Insbesondere gelten Vorteile, die im Rahmen des ersten, zweiten, und/oder dritten Aspekts beschrieben werden, auch jeweils für den ersten, zweiten und/oder dritten Aspekt.

Die obenstehende Aufgabe wird gemäß einem ersten Aspekt gelöst durch eine Transportbox zur Überwachung von Verkehrsszenen und/oder zur Sicherheitsüberwachung, aufweisend:
- eine Befestigungsvorrichtung, über welche die Transportbox an einem Transportfahrrad anordenbar ist,
- ein Gehäuse umfassend zumindest eine Messeinheit, welche eingerichtet ist zum Messen zumindest eines Parameters, welcher spezifisch ist für ein überwachtes Objekt,
- zumindest ein, bevorzugt drei Standfüße, durch welche die Transportbox auf einem darunterliegenden Boden abstützbar ist, wobei die Standfüße an dem Gehäuse angeordnet sind.

Die Transportbox kann für eine Überwachung einer Verkehrsszene (z.B. einer Straße und/oder Kreuzung und/oder einer Fußgängerzone) und/oder zur (zivilen) Sicherheitsüberwachung eingerichtet sein. Dabei kann die Transportbox zum Messen zumindest eines Parameters eingerichtet sein, welcher spezifisch ist für ein überwachtes und/oder externes Objekt, z.B. eines Fahrzeugs (insbesondere Kraftfahrzeugs, Kraftfahrrads, und/oder Fahrrads) und/oder einer Person (insbesondere Fußgängern). Demnach kann der zumindest eine Parameter ein Bild (Foto), eine zeitliche Bilderabfolge (Video), eine Geschwindigkeit (z.B. eines vorbeifahrenden Fahrzeugs) und/oder einen Abstand umfassen. Dadurch können die Sicherheit erhöht und/oder Verstöße (z.B. Geschwindigkeitsübertretungen, mangelnder Abstand, [an diesem Standort] nicht zugelassene Fahrzeuge, Straftaten, Vandalismus und dergleichen) aufgeklärt werden. Zusätzlich oder alternativ kann die Transportbox auch für eine Sicherheitsüberwachung eingerichtet sein. So kann eine (oder mehrere) Kameras beispielsweise die (direkte) Umgebung der Transportbox überwachen. Dies kann die Sicherheit erhöhen. Die Transportbox kann dabei eine (zumindest teilweise) abgeschlossene Einheit bilden, welche von einem Transportfahrrad transportiert, (an einem Zielort) abgeladen und/oder aufgenommen werden kann. Die Transportbox kann, insbesondere in Abwesenheit eines Transportfahrrads, für einen autonomen und/oder autarken Betrieb eingerichtet sein. Demnach kann die Transportbox, insbesondere nach einem Abladen, (durch eine Steuereinheit) selbstständig betrieben werden und insbesondere ein Messen des zumindest einen Parameters durchführen. Hierfür kann die Transportbox eine Energiequelle, insbesondere eine wiederaufladbare Batterie, aufweisen, welche vorzugsweise an und/oder durch das Transportfahrrad (während der Fahrt) geladen werden kann. Es kann vorgesehen sein, dass die Batterie bzw. die Transportbox ein Solarpanel (z.B. an der Oberseite des Gehäuses) aufweist, durch welches die Batterie aufgeladen werden kann. Alternativ oder zusätzlich kann die Transportbox einen Anschluss aufweisen, welcher eine (lokale) Versorgung z.B. über eine Steckdose ermöglichen kann. Die Messeinheit und/oder die Beleuchtungseinheit kann (zusätzlich) eine oder mehrere Kameras aufweisen, welche insbesondere zum Aufzeichnen von Bild und/oder Ton eingerichtet sind.

Es kann vorgesehen sein, dass die Transportbox, insbesondere die Befestigungsvorrichtung, mit bestehenden Transportfahrrädern und/oder Gegenbefestigungsvorrichtungen kompatibel ausgestaltet ist. Dies kann die Kosten und/oder die Flexibilität verbessern.

Die Transportbox kann eine Befestigungsvorrichtung aufweisen, über welche die Transportbox an einem Transportfahrrad reversibel lösbar anordenbar (angeordnet) ist.

Das Gehäuse umfassend zumindest eine Messeinheit, welche eingerichtet ist zum Messen zumindest eines Parameters, welcher spezifisch ist für ein überwachtes Objekt, kann dabei die übrigen Komponenten, insbesondere Messeinheit, Beleuchtungseinheit, Standfüße (z.B. an einem Boden), Außenverkleidung, Fixiervorrichtung, Positioniervorrichtung, Verstellvorrichtung, Stativ, Energiequelle und/oder Steuereinheit aufweisen und/oder umschließen. Insbesondere können diese innerhalb des Gehäuses angeordnet (befestigt, z.B. verschraubt) sein. Das Gehäuse kann beispielsweise quaderförmig ausgestaltet sein, was eine einfache Fertigung ermöglicht. Vorzugsweise kann das Gehäuse ein (für den Transport) leichtes und/oder (gegen Krafteinwirkung) stabiles Material aufweisen, beispielsweise Aluminium.

Die zumindest drei (vorzugsweise vier) (in möglichen Ausführungen auch nur ein oder zwei) Standfüße, durch welche die Transportbox auf einem darunterliegenden Boden abstützbar ist, können an dem Gehäuse angeordnet sein, vorzugsweise außenliegend und/oder an einem (nach unten weisenden) Boden des Gehäuses. Die Standfüße können beispielsweise an und/oder nahe der (untenliegenden) Ecken und/oder Kanten des Gehäuses angeordnet sein. Die Standfüße können dabei Rollen und/oder Bremsen (für die Rollen) aufweisen. Durch die Standfüße (insbesondere mit Rollen oder Ketten oder Bändern für Bandantrieb) kann die Transportbox während des Transports beweglich und/oder abrollbar sein (was insbesondere einen Transport ohne Hebeeinheit ermöglichen kann). Alternativ oder zusätzlich können die Standfüße für ein Positionieren, Bewegen und/oder Fixieren an einem (Ziel-)Standort eingerichtet sein. Es kann vorgesehen sein, dass die Rollen eine Antriebseinheit aufweisen, welche insbesondere von der Steuereinheit betrieben (Steuern und/oder Regeln) werden können. Dadurch kann die Transportbox autark und/oder autonom positionierbar sein. Dadurch kann die Transportbox insbesondere ihre Position und/oder Ausrichtung nachjustieren und/oder verändern, z.B. um einen (bisher) toten Winkel zu überwachen und/oder (für diesen) ein Messen zu ermöglichen. Dies kann die Sicherheit und/oder Flexibilität verbessern. Es kann vorgesehen sein, dass die Standfüße (insbesondere die Rollen) in dem Gehäuse teilweise versenkt sind, was vorteilhafterweise die Sicherheit und/oder Robustheit verbessern kann. Es kann auch vorgesehen sein, dass die Standfüße, insbesondere über eine (von der Steuereinheit betreibbare) Positioniervorrichtung und/oder entsprechende Standfußausnehmungen (im Gehäuse), versenkbar, einfahrbar und/oder ausfahrbar ausgestaltet sind. Dies kann die Flexibilität und/oder Robustheit erhöhen.

Im Rahmen der Erfindung kann es von Vorteil sein, dass die Befestigungsvorrichtung dazu eingerichtet ist, die Transportbox reversibel lösbar an einem Transportfahrrad zu befestigen.

Demnach kann die Befestigungsvorrichtung dafür eingerichtet sein, die Transportbox an dem (separaten)Transportfahrrad (reversibel lösbar) zu befestigen, vorzugsweise werkzeuglos, beispielsweise durch Verwendung von Schnellspanner(n) und/oder Schrauben mit Rändelmutter. Beispielsweise kann das Transportfahrrad eine Gegenbefestigungsvorrichtung, z.B. eine Hebevorrichtung (z.B. mit Haken) aufweisen, welche mit der Befestigungsvorrichtung (z.B. einem im Gehäuse eingelassenen Stift) reversibel lösbar in Eingriff gebracht werden kann. Die Gegenbefestigungsvorrichtung kann zum Anheben (z.B. über einen oder zwei Hebel), Befestigen und/oder Absenken verwendet werden. Die Befestigungsvorrichtung kann dafür beispielsweise außenliegend (etwa an einem Gehäuse und/oder einem Rahmen [des Gehäuses]) an der Transportbox angeordnet sein. Es kann vorgesehen sein, dass die Befestigungsvorrichtung einen Sensor aufweist, welcher dafür eingerichtet ist, eine passende und/oder authentifizierte Gegenbefestigungsvorrichtung zu erkennen. Beispielsweise kann die Befestigungsvorrichtung einen Stecker aufweisen, der reversibel lösbar mit einem Gegenstecker der Gegenbefestigungsvorrichtung in Eingriff gebracht werden kann. Dadurch kann ein (mechanisches) Authentifizieren erfolgen, welches insbesondere bei einem nicht autorisierten Entwenden (z.B. Diebstahl) einen Alarm auslösen kann. Alternativ oder zusätzlich kann es vorgesehen sein, dass die Befestigungsvorrichtung und die Gegenbefestigungsvorrichtung, insbesondere über Stecker und/oder Gegenstecker (bzw. die Steuereinheit der Transportbox und/oder eine Steuereinheit des Fahrrads), einen Authentifizierungsschlüssel austauschen. Dadurch kann die Sicherheit erhöht werden.

Im Rahmen der Erfindung ist es denkbar, dass das Gehäuse einen Rahmen aufweist, in dessen Innenraum die zumindest eine Messeinheit angeordnet ist.

Der Rahmen kann dabei eine (mechanische) Stützstruktur des Gehäuses bilden, beispielsweise kann der Rahmen Aluminiumprofile aufweisen, welche insbesondere einen Quader bilden. Das Gehäuse kann dazu (nach außen weisende) Deckplatten aufweisen, welche an dem Rahmen befestigt sind. Das Gehäuse und/oder der Rahmen kann einen Innenraum aufweisen und/oder definieren, in welchem die übrigen Komponenten der Transportbox, insbesondere Messeinheit, Beleuchtungseinheit, Kamera, (zumindest teilweise die) Standfüße (z.B. an einem Boden), Fixiervorrichtung, Positioniervorrichtung, Verstellvorrichtung, Stativ, Energiequelle und/oder Steuereinheit, angeordnet sind. Der Rahmen kann dazu auch im Innenraum entsprechende Querstreben aufweisen, an und/oder auf welchen die vorbezeichneten Komponenten befestigt sind. Dabei können die Komponenten der Transportbox, insbesondere Messeinheit, Beleuchtungseinheit, Kamera, (sämtliche) Deckel, (zumindest teilweise die) Standfüße (z.B. an einem Boden), Fixiervorrichtung, Positioniervorrichtung, Verstellvorrichtung und/oder Stativ (zumindest teilweise) relativ zu dem Gehäuse und/oder Rahmen (reversibel) bewegbar sein, beispielsweise über (jeweilige) Aktuatoren (z.B. Elektromotoren), welche vorzugsweise von der Steuereinheit betrieben werden (angesteuert und/oder geregelt).

Es kann im Rahmen der Erfindung vorgesehen sein, dass das Gehäuse, insbesondere der Rahmen, zumindest eine Ausnehmung für die zumindest eine Messeinheit aufweist, wobei die Ausnehmung der zumindest einen Messeinheit ein Messen des zumindest einen Parameters durch die Ausnehmung hindurch ermöglicht,
wobei vorzugsweise das Gehäuse, insbesondere der Rahmen, zumindest zwei einander gegenüberliegende Ausnehmungen aufweist (vorzugsweise auf gegenüberliegenden Seiten des Gehäuses) für jeweils zumindest eine Messeinheit, wobei die Ausnehmungen der jeweiligen Messeinheit ein Messen des zumindest einen Parameters durch die Ausnehmung hindurch ermöglichen. Die Ausnehmung für die Messeinheit als auch für die Beleuchtungseinheit kann über den ganzen Umfang des Gehäuses ausgestaltet sein und über entsprechende Verbindungsstege können die Fenster/transparente Scheibenelement(e) in Position gehalten werden.

Im Rahmen der Erfindung kann entsprechend der Plural und der Singular austauschbar verwendet werden, insbesondere, wenn ein oder mehrere (z.B. zwei) Bauteile verwendet werden (z.B. Ausnehmung und Ausnehmungen). Vorzugsweise sind (mehrere) Ausnehmungen symmetrisch bezüglich des Gehäuses und/oder eines Drehpunkts bzw. einer Drehachse angeordnet, sodass beispielsweise ein Drehen der Messeinheit von einer Ausnehmung zu einer anderen (z.B. gegenüberliegenden oder benachbarten) Ausnehmung jeweils der Messeinheit ein Messen aus dem Gehäuse heraus ermöglicht (z. B durch eine fluchtende Anordnung zwischen Messeinheit und Ausnehmung). Die Ausnehmung(en) kann/können dabei ein Loch in dem Gehäuse aufweisen, insbesondere im Rahmen und/oder in den Deckplatten. Die Ausnehmung(en) kann/können einen quadratischen Querschnitt aufweisen, was eine einfache Fertigung ermöglicht. Die Ausnehmung(en) kann/können alternativ einen runden und/oder ovalen Querschnitt aufweisen, was vorteilhafterweise die Robustheit verbessern kann und/oder (besser) an die Form der Messeinheit und/oder der Beleuchtungseinheit und/oder Kamera (welche rund ausgestaltet sein können) angepasst sein kann (z.B. um Streulicht, Krafteinwirkung und/oder äußere Umwelteinflüsse wie etwa Nässe zu reduzieren). Es kann vorgesehen sein, dass die Ausnehmungen vorzugsweise an gegenüberliegenden und/oder benachbarten, vorzugsweise an allen Seiten des, vorzugsweise quaderförmigen, Gehäuses angeordnet sind. Dies kann den Blickwinkel erhöhen und/oder tote Winkel reduzieren (oder vollständig verhindern, insbesondere eine 360° Rundumsicht ermöglichen). Besonders vorteilhaft kann dies mit einer schwenkbaren und/oder drehbaren Messeinheit und/oder Beleuchtungseinheit und/oder Kamera kombiniert werden, welche jeweils flexibel durch eine (der) Ausnehmung(en) ein Messen und/oder Beleuchten und/oder Fotografieren und/oder Filmen durchführen kann.

Es ist ferner denkbar, dass die Ausnehmung, insbesondere die Ausnehmungen, einen Deckel, insbesondere jeweils einen Deckel, aufweist.

Dabei kann der Deckel für ein (reversibel lösbares) Verdecken, Verschließen und/oder Abdichten der Ausnehmung eingerichtet sein. Dabei kann jeder Ausnehmung ein Deckel zugeordnet sein. Dadurch kann wahlweise und/oder flexibel eine Ausnehmung durch den Deckel geöffnet sein (werden) und/oder geschlossen sein (werden). Beispielsweise kann ein Deckel (ähnlich einer Tür) horizontal und/oder vertikal (über eine an der Ausnehmung angeordnete Achse) schwenkbar und/oder drehbar sein. Alternativ kann es vorgesehen sein, dass der Deckel im Wesentlichen parallel zur Ausnehmung und/oder dem Gehäuse (bzw. der Oberfläche des Gehäuses) beweglich gelagert ist, wobei der Deckel insbesondere in dem Gehäuse angeordnet sein kann, beispielsweise über eine oder zwei Schienen und/oder einen (Linear-)Motor. Ein (jeder) Deckel kann dabei einen Aktuator (z.B. Elektromotor) und/oder Sensor (zum Feststellen der Position) aufweisen, welche (jeweils) über eine Datenverbindung mit der Steuereinheit datenkommunizierend verbunden sein können. Die Steuereinheit kann die Deckel (entsprechend) schließen und/oder öffnen. Dadurch kann die Flexibilität, Sicherheit und/oder die Robustheit verbessert werden. Beispielsweise kann über den oder die Deckel die Transportbox (z.B. bei Regen) von der Umwelt abgeschlossen und/oder isoliert und/oder abgedichtet werden. Dies kann die Robustheit und/oder den Komfort erhöhen, da insbesondere kein Abbau bei Regenwetter notwendig ist. Vorteilhafterweise kann dabei auch, insbesondere in Abhängigkeit von einem Standort, an welchem die Transportbox zum Messen positioniert ist, ein Deckel verschlossen oder geöffnet werden, z.B. geschlossen wenn dieser einer direkt benachbarten Wand (z.B. eines Gehäuses) zugewandt ist.

Auch ist es denkbar, dass das Gehäuse, insbesondere der Rahmen, eine Beleuchtungseinheit und eine entsprechende Beleuchtungsausnehmung für die Beleuchtungseinheit aufweist, durch welche von der Beleuchtungseinheit emittiertes Blitzlicht das Gehäuse verlassen kann, wobei insbesondere zwei einander gegenüberliegende Beleuchtungseinheiten mit jeweils einer entsprechenden Beleuchtungsausnehmung vorgesehen sind, wobei vorzugsweise die Beleuchtungsausnehmung einen Beleuchtungsdeckel aufweist.

Die Beleuchtungseinheit kann, insbesondere zusammen mit der Messeinheit und/oder Kamera, ausgelöst werden (z.B. über die Steuereinheit), um eine Beleuchtung der Umgebung und/oder eines Objekts zu ermöglichen, insbesondere durch (von der Beleuchtungseinheit) emittierten Blitzlicht, z.B. Infrarotblitzlicht.

Die Beleuchtungseinheit und die Messeinheit können dabei nebeneinander oder übereinander angeordnet sein. Dementsprechend können auch die Ausnehmungen nebeneinander oder übereinander angeordnet sein.

Im Rahmen der Erfindung kann entsprechend der Plural und der Singular austauschbar verwendet werden, insbesondere wenn eine oder mehrere (z.B. zwei) Bauteile verwendet werden (z.B. Beleuchtungsausnehmung und Beleuchtungsausnehmungen). Die Beleuchtungsausnehmung(en) kann/können dabei ein Loch in dem Gehäuse aufweisen, insbesondere im Rahmen und/oder in den Deckplatten. Die Beleuchtungsausnehmung(en) kann/können einen quadratischen Querschnitt aufweisen, was eine einfache Fertigung ermöglicht. Die Beleuchtungsausnehmung(en) kann/können alternativ einen runden und/oder ovalen Querschnitt aufweisen, was vorteilhafterweise die Robustheit verbessern kann und/oder (besser) an die Form der Messeinheit und/oder der Beleuchtungseinheit und/oder Kamera (welche rund ausgestaltet sein können) angepasst sein kann (z.B. um Streulicht, Krafteinwirkung und/oder äußere Umwelteinflüsse wie etwa Nässe zu reduzieren). Es kann vorgesehen sein, dass die Beleuchtungsausnehmungen vorzugsweise an gegenüberliegenden und/oder benachbarten, vorzugsweise an allen Seiten des, vorzugsweise quaderförmigen, Gehäuses angeordnet sind. Dies kann den Blickwinkel erhöhen und/oder tote Winkel reduzieren (oder vollständig verhindern, insbesondere eine 360° Rundumsicht ermöglichen). Besonders vorteilhaft kann dies mit einer schwenkbaren und/oder drehbaren Messeinheit und/oder Beleuchtungseinheit und/oder Kamera kombiniert werden, welche jeweils flexibel durch eine (der) Beleuchtungsausnehmung(en) ein Messen und/oder Beleuchten und/oder Fotografieren und/oder Filmen durchführen kann.

Dabei kann der Beleuchtungsdeckel für ein (reversibel lösbares) Verdecken, Verschließen und/oder Abdichten der Beleuchtungsausnehmung eingerichtet sein. Dabei kann jeder Beleuchtungsausnehmung ein Beleuchtungsdeckel zugeordnet sein. Dadurch kann wahlweise und/oder flexibel eine Beleuchtungsausnehmung durch den Beleuchtungsdeckel geöffnet sein/werden und/oder geschlossen sein/werden. Beispielsweise kann ein Beleuchtungsdeckel (ähnlich einer Tür) horizontal und/oder vertikal (über eine an der Beleuchtungsausnehmung angeordnete Achse) schwenkbar und/oder drehbar sein. Alternativ kann es vorgesehen sein, dass der Beleuchtungsdeckel im Wesentlichen parallel zur Beleuchtungsausnehmung und/oder dem Gehäuse (bzw. der Oberfläche des Gehäuses) beweglich gelagert ist, wobei der Beleuchtungsdeckel insbesondere in dem Gehäuse angeordnet sein kann, beispielsweise über eine oder zwei Schienen und/oder einen (Linear-)Motor. Ein/jeder Beleuchtungsdeckel kann dabei einen Aktuator (z.B. Elektromotor) und/oder Sensor (zum Feststellen der Position) aufweisen, welche (jeweils) über eine Datenverbindung mit der Steuereinheit datenkommunizierend verbunden sein können. Die Steuereinheit kann die Beleuchtungsdeckel (entsprechend) schließen und/oder öffnen. Dadurch kann die Flexibilität, Sicherheit und/oder die Robustheit verbessert werden. Beispielsweise kann über den oder die Beleuchtungsdeckel die Transportbox (z.B. bei Regen) von der Umwelt abgeschlossen und/oder isoliert und/oder abgedichtet werden. Dies kann die Robustheit und/oder den Komfort erhöhen, da insbesondere kein Abbau bei Regenwetter notwendig ist. Vorteilhafterweise kann dabei auch, insbesondere in Abhängigkeit von einem Standort, an welchem die Transportbox zum Messen positioniert ist, ein Beleuchtungsdeckel verschlossen oder geöffnet werden, z.B. geschlossen, wenn dieser einer direkt benachbarten Wand (z.B. eines Gehäuses) zugewandt ist.

Im Rahmen der Erfindung ist es optional möglich, dass das Gehäuse, insbesondere der Rahmen, eine reversibel lösbare Außenverkleidung aufweist, welche insbesondere zumindest eine (oder mehrere) Verkleidungsausnehmung(en) aufweist, die deckungsgleich zu der zumindest einen Ausnehmung und/oder Beleuchtungsausnehmung (oder den Ausnehmungen und/oder Beleuchtungsausnehmungen) ausgebildet ist.

Dabei kann die Außenverkleidung an dem Gehäuse, insbesondere an dem Rahmen, (reversibel lösbar) angeordnet, insbesondere befestigt sein. Es kann vorgesehen sein, dass die Außenverkleidung direkt an dem Rahmen befestigbar ist. Dabei kann es vorgesehen sein, dass die Deckplatten und die Außenverkleidung wahlweise und/oder austauschbar ausgestaltet sind. Die Deckplatten können dabei für einen normalen Einsatz, z.B. in einem sicheren und/oder gut überwachten und/oder zugänglichen Standort verwendet werden. Die Deckplatten können beispielsweise Kunststoff und/oder Plastik und/oder Holz aufweisen. Die Außenverkleidung kann (geometrisch) identisch und/oder vergleichbar zu den Deckplatten ausgestaltet sein. Dabei kann die Außenverkleidung für eine höhere Robustheit, insbesondere Schlagzähigkeit und/oder Bruchfestigkeit, eingerichtet sein. Dabei kann vorteilhafterweise die Außenverkleidung eine erhöhte Sicherheit und/oder Robustheit bereitstellen, insbesondere für Standorte, an denen eine erhöhte Krafteinwirkung zu erwarten ist, z.B. durch Fahrzeuge (gefährliche Kreuzung), Vandalismusgefahr und/oder Umwelteinflüsse (z.B. herabfallende Äste, Steine etc.). Die Außenverkleidung kann beispielsweise verstärkt ausgestaltet sein. Die Außenverkleidung kann bevorzugt eine Dicke von zumindest 5 mm, insbesondere 10 mm, vorzugsweise 15 mm, besonders bevorzugt 25 mm aufweisen. Die Außenverkleidung kann beispielsweise Stahl aufweisen. Demnach kann die Außenverkleidung beispielsweise (rechteckige) Stahlplatten aufweisen, welche an dem Gehäuse und/oder Rahmen befestigt werden können (z.B. reversibel lösbar angeschraubt). Es kann bevorzugt vorgesehen sein, dass die Außenverkleidung zusätzlich und/oder außerhalb (von außen) an dem Gehäuse und/oder Rahmen angeordnet werden kann, insbesondere auf und/oder (außenliegend) an den Deckplatten. Dies kann die Sicherheit flexibel und/oder erweiterbar erhöhen.

Im Rahmen der Erfindung kann entsprechend der Plural und der Singular austauschbar verwendet werden, insbesondere wenn eine oder mehrere (z.B. zwei) Bauteile verwendet werden (z.B. Verkleidungsausnehmung und Verkleidungsausnehmungen). Die Verkleidungsausnehmung(en) kann/können dabei ein Loch in der Verkleidung aufweisen. Die Verkleidungsausnehmung(en) kann/können einen quadratischen Querschnitt aufweisen, was eine einfache Fertigung ermöglicht. Die Verkleidungsausnehmung(en) kann/können alternativ einen runden und/oder ovalen Querschnitt aufweisen, was vorteilhafterweise die Robustheit verbessern kann und/oder (besser) an die Form der Messeinheit und/oder der Beleuchtungseinheit und/oder Kamera (welche rund ausgestaltet sein können) angepasst sein kann (z.B. um Streulicht, Krafteinwirkung und/oder äußere Umwelteinflüsse wie etwa Nässe zu reduzieren). Es kann vorgesehen sein, dass die Verkleidungsausnehmungen vorzugsweise an gegenüberliegenden und/oder benachbarten, vorzugsweise an allen Seiten des/der, vorzugsweise quaderförmigen, Gehäuse(s) und/oder Verkleidung angeordnet sind. Dies kann den Blickwinkel erhöhen und/oder tote Winkel reduzieren (oder vollständig verhindern, insbesondere eine 360° Rundumsicht ermöglichen). Besonders vorteilhaft kann dies mit einer schwenkbaren und/oder drehbaren Messeinheit und/oder Beleuchtungseinheit und/oder Kamera kombiniert werden, welche jeweils flexibel durch eine (der) Verkleidungsausnehmung(en) ein Messen und/oder Beleuchten und/oder Fotografieren und/oder Filmen durchführen kann.

Dabei kann für eine/jede Verkleidungsausnehmung ein Verkleidungsdeckel vorgesehen sein. Dabei kann der Verkleidungsdeckel für ein (reversibel lösbares) Verdecken, Verschließen und/oder Abdichten der Verkleidungsausnehmung eingerichtet sein. Dabei kann jeder Verkleidungsausnehmung ein Verkleidungsdeckel zugeordnet sein. Dadurch kann wahlweise und/oder flexibel eine Verkleidungsausnehmung durch den Verkleidungsdeckel geöffnet sein/werden und/oder geschlossen sein/werden. Beispielsweise kann ein Verkleidungsdeckel (ähnlich einer Tür) horizontal und/oder vertikal (über eine an der Verkleidungsausnehmung angeordnete Achse) schwenkbar und/oder drehbar sein. Alternativ kann es vorgesehen sein, dass der Verkleidungsdeckel im Wesentlichen parallel zur Verkleidungsausnehmung und/oder dem Gehäuse (bzw. der Oberfläche des Gehäuses) beweglich gelagert ist, wobei der Verkleidungsdeckel insbesondere in der Verkleidung (bzw. dessen Wand) angeordnet sein kann, beispielsweise über eine oder zwei Schienen und/oder einen (Linear-)Motor. Ein/jeder Verkleidungsdeckel kann dabei einen Aktuator (z.B. Elektromotor) und/oder Sensor (zum Feststellen der Position) aufweisen, welche (jeweils) über eine Datenverbindung mit der Steuereinheit datenkommunizierend verbunden sein können. Die Steuereinheit kann die Verkleidungsdeckel (entsprechend) schließen und/oder öffnen. Dadurch kann die Flexibilität, Sicherheit und/oder die Robustheit verbessert werden. Beispielsweise kann über den oder die Verkleidungsdeckel die Transportbox (z.B. bei Regen) von der Umwelt abgeschlossen und/oder isoliert und/oder abgedichtet werden. Dies kann die Robustheit und/oder den Komfort erhöhen, da insbesondere kein Abbau bei Regenwetter notwendig ist. Vorteilhafterweise kann dabei auch, insbesondere in Abhängigkeit von einem Standort, an welchem die Transportbox zum Messen positioniert ist, ein Verkleidungsdeckel verschlossen oder geöffnet werden, z.B. geschlossen, wenn dieser einer direkt benachbarten Wand (z.B. eines Gehäuses) zugewandt ist. Der Verkleidungsdeckel kann dabei beispielsweise Stahl aufweisen. Dadurch kann ein besserer Schutz bereitgestellt werden. Dadurch kann die Sicherheit erhöht werden.

Ferner kann es im Rahmen der Erfindung vorgesehen sein, dass das Gehäuse, insbesondere der Rahmen, eine Fixiervorrichtung, insbesondere einen Greifer und/oder einen Bohrer, aufweist, durch welche die Transportbox an einem (Ziel-)Standort, insbesondere an einem darunterliegenden Boden (z.B. einer Wiese auf einem Seitenstreifen und/oder einem gepflasterten Gehweg) und/oder einem benachbarten Gegenstand (z.B. einem Straßenschild, einer Leitplanke und/oder einem Gebäude[teil]), reversibel lösbar fixierbar ist.

Die Fixiervorrichtung kann über eine Datenverbindung von der Steuereinheit betrieben werden (siehe unten). Insbesondere kann die Fixiervorrichtung über einen Aktuator betätigt werden. Die Fixiervorrichtung kann eingerichtet sein, um die Transportbox (reversibel lösbar) an einem (Ziel-)Standort zu befestigen. Beispielsweise kann ein Bohrer sich in eine Wiese einbohren, wodurch die Transportbox nicht (oder schwerer) bewegt werden kann. Ein Greifer kann beispielsweise in einen Rasengitterstein, einen Bordstein und/oder eine Öffnung im Boden eingreifen. Dies kann die Sicherheit erhöhen (insbesondere vor Diebstahl). Die Fixiervorrichtung kann an einem untenliegenden Boden und/oder einer Seitenwand der Transportbox angeordnet sein. Die Fixiervorrichtung kann zumindest teilweise und/oder ausfahrbar in dem Gehäuse angeordnet sein. Vorzugsweise kann die Fixiervorrichtung über eine (Fixiervorrichtungs-)Ausnehmung (analog und/oder vergleichbar zu den oben beschriebenen Ausnehmungen) am Boden und/oder einer Seitenwand des Gehäuses ausgefahren und/oder eingefahren werden.

In Bezug auf die vorliegende Erfindung ist es vorstellbar, dass das Gehäuse, insbesondere der Rahmen, zumindest eine (oder mehrere) Positioniervorrichtung(en) aufweist, welche, insbesondere an und/oder über zumindest einen der zumindest drei Standfüße, für eine Höheneinstellung und/oder ein Austarieren (z.B. horizontal und/oder waagrechtes Ausrichten) der Transportbox (relativ zu einem darunterliegenden Boden) eingerichtet ist.

Der (oder die) Positioniervorrichtung(en) können dabei für ein Bewegen, insbesondere Einfahren und/oder Ausfahren, der zumindest drei Standfüße eingerichtet sein. Dabei können die (jeweiligen) Standfüße und/oder Positioniervorrichtungen ein separates Bewegen der Standfüße bereitstellen. Vorzugsweise kann/können die Positioniervorrichtung(en) über eine jeweilige Datenverbindung datenkommunizierend mit der Steuereinheit verbunden sein, wodurch die Steuereinheit diese betreiben kann. Vorzugsweise umfasst die Steuereinheit dabei ein Mittel zum Feststellen einer Standfestigkeit und/oder Ausrichtung (z.B. einer Wasserwaage). Die Positioniervorrichtung kann beispielsweise einen (elektrischen) Linearmotor aufweisen, welcher eine Teleskopkonstruktion am Standfuß betätigt. Dadurch kann der Standfuß relativ zu dem Gehäuse bewegt, insbesondere ein- und/oder ausgefahren, werden.

Ferner ist es vorstellbar, dass das Gehäuse, insbesondere der Rahmen, einen unteren Gehäuseteil und einen (separaten) oberen Gehäuseteil aufweist, wobei der obere Gehäuseteil gegenüber dem unteren Gehäuseteil über eine Verstellvorrichtung verstellbar, insbesondere beabstandbar, drehbar und/oder schwenkbar und/oder höhenverstellbar, ausgebildet ist, wobei insbesondere der obere Gehäuseteil aufweist:
- eine Beleuchtungseinheit,
- zumindest eine Messeinheit und/oder
- eine Kamera, welche zum Überwachen einer Umgebung der Transportbox eingerichtet ist.

Der obere Gehäuseteil kann die Messeinheit, Beleuchtungseinheit und/oder Kamera(s) aufweisen (sowie entsprechende Ausnehmungen, siehe oben, insbesondere analog für die Kamera oder die Kameras). Die Verstellvorrichtung kann demnach ein (Kugel-)Gelenk aufweisen, welches vorteilhafterweise ein Drehen (z.B. um eine Vertikale) und/oder Schwenken des Oberteils relativ zu dem Unterteil ermöglicht. Hierfür kann die Verstellvorrichtung einen Aktuator aufweisen (z.B. einen Elektromotor), welcher über eine Datenverbindung von der Steuereinheit betrieben werden kann. Dadurch kann eine Messeinheit und/oder Beleuchtungseinheit und/oder Kamera ausreichend sein, um dennoch einen Rundumblick bzw. ein Messen und/oder eine Überwachung mit 360° Abdeckung bereitzustellen. So kann beispielsweise eine Transportbox für ein Überwachen einer Straße eingerichtet sein, auf welcher tageszeitenspezifisch der Verkehr (überwiegend) erst in die eine Richtung und (später) in eine andere Richtung verläuft (z.B. Berufspendelverkehr). Alternativ oder zusätzlich kann die Verstellvorrichtung für eine Höhenverstellung eingerichtet sein. Die Verstellvorrichtung kann demnach eine Höhenverstelleinheit, z.B. eine Teleskopvorrichtung, aufweisen, welche vorteilhafterweise eine (translatorische) Bewegung entlang einer Vertikalen ermöglicht und/oder einen einstellbaren Abstand zwischen Oberteil relativ zu dem Unterteil. Hierfür kann die Verstellvorrichtung einen Aktuator aufweisen (z.B. einen Elektromotor), welcher über eine Datenverbindung von der Steuereinheit betrieben werden kann. Dadurch kann das Oberteil, insbesondere eine Messeinheit und/oder Beleuchtungseinheit und/oder Kamera, einen einstellbaren Abstand zum Boden und/oder Unterteil aufweisen. Dies kann eine genauere Überwachung (z.B. über eine Menschenmenge hinweg) und/oder ein verbessertes Messen (z.B. von einem Standort aus, der teilweise durch Hindernisse am Boden ein Messen verhindern würde) ermöglichen.

Im Rahmen der Erfindung kann es von Vorteil sein, dass das Gehäuse, insbesondere ein oberer Gehäuseteil, ein, insbesondere ausfahrbares, Stativ aufweist, welches relativ zu dem Gehäuse und/oder Oberteil verstellbar, insbesondere beabstandbar, drehbar und/oder schwenkbar und/oder höhenverstellbar, positionierbar ist, wobei insbesondere das Stativ aufweist:
- eine weitere Beleuchtungseinheit, welche beispielsweise für eine dauerhafte Beleuchtung (kein Blitzlicht) eingerichtet ist (z.B. ein Flutlicht),
- eine bzw. die Beleuchtungseinheit,
- zumindest eine bzw. die Messeinheit und/oder
- eine bzw. die Kamera(s), welche zum Überwachen einer Umgebung der Transportbox eingerichtet ist.

Das Stativ kann, insbesondere an einem oberen Ende, die Messeinheit, Beleuchtungseinheit, weitere Beleuchtungseinheit und/oder Kamera(s) aufweisen (sowie entsprechende Ausnehmungen, siehe oben, insbesondere analog für den oder die Kameras). Das Stativ kann ein (Kugel-)Gelenk aufweisen, welches vorteilhafterweise ein Drehen (z.B. um eine Vertikale) und/oder Schwenken des Stativs relativ zu dem Gehäuse und/oder Oberteil ermöglicht. Hierfür kann das Stativ einen Aktuator aufweisen (z.B. einen Elektromotor), welcher über eine Datenverbindung von der Steuereinheit betrieben werden kann. Dadurch kann eine Messeinheit, Beleuchtungseinheit, weitere Beleuchtungseinheit und/oder Kamera ausreichend sein, um dennoch einen Rundumblick bzw. ein Messen und/oder Überwachung mit 360° Abdeckung bereitzustellen. So kann beispielsweise eine Transportbox für ein Überwachen einer Straße eingerichtet sein, auf welcher tageszeitenspezifisch der Verkehr (überwiegend) erst in die eine Richtung und (später) in eine andere Richtung verläuft (z.B. Berufspendelverkehr). Alternativ oder zusätzlich kann das Stativ für eine Höhenverstellung eingerichtet sein. Das Stativ kann demnach eine weitere Höhenverstelleinheit, z.B. eine Teleskopvorrichtung, aufweisen, welche vorteilhafterweise eine (translatorische) Bewegung entlang einer Vertikalen ermöglicht und/oder einen einstellbaren Abstand zwischen dem Stativ, insbesondere einem oberen Ende des Stativs, relativ zu dem Gehäuse und/oder Oberteil. Hierfür kann das Stativ einen Aktuator aufweisen (z.B. einen Elektromotor), welcher über eine Datenverbindung von der Steuereinheit betrieben werden kann. Dadurch kann das Stativ, insbesondere ein oberes Ende des Stativs, vorzugsweise die Messeinheit, Beleuchtungseinheit, weitere Beleuchtungseinheit und/oder Kamera, einen einstellbaren Abstand zum Boden und/oder Oberteil aufweisen. Dies kann eine genauere Überwachung (z.B. über eine Menschenmenge hinweg) und/oder ein verbessertes Messen (z.B. von einem Standort aus, an welchem durch Hindernisse am Boden ein Messen zumindest teilweise verhindert wäre) ermöglichen. Besonders bevorzugt kann es sein, dass das Stativ (am oberen Ende) eine weitere Beleuchtungseinheit und/oder eine Kamera aufweist. Dies kann eine (über die Steuereinheit) schaltbare Beleuchtung und/oder Überwachung bereitstellen, welche vorteilhafterweise (durch Drehung) eine 360° Abdeckung senkrecht zur Drehachse und/oder Vertikalen ermöglicht.

Im Rahmen der Erfindung ist es denkbar, dass die Transportbox eine Steuereinheit aufweist, welche eingerichtet ist zum Betreiben der Befestigungsvorrichtung und der zumindest einen Messeinheit, wobei insbesondere die Steuereinheit eingerichtet ist zum Betreiben (insbesondere Steuern und/oder Regeln):
- der Standfüße,
- der Beleuchtungseinheit,
- der weiteren Beleuchtungseinheit,
- eines zum Lösen und/oder Fixieren der Außenverkleidung eingerichteten Verschlussmechanismus,
- der Fixiervorrichtung,
- der Positioniervorrichtung,
- der Verstellvorrichtung,
- des Stativs und/oder
- der Kamera(s).

Dabei können die vorgenannten Komponenten (jeweils) Sensoren aufweisen, welche der Steuereinheit einen Zustand, eine Position und/oder eine Ausrichtung (Richtung bzw. Winkel) übermitteln. Die Steuereinheit kann dabei eine (jeweilige) Datenverbindung zu den vorgenannten Komponenten aufweisen, um diese zu betreiben, insbesondere zu steuern und/oder zu regeln, beispielsweise über entsprechende Aktuatoren. Beispielsweise kann die Steuereinheit von der Messeinheit zum Messen des zumindest einen Parameters, insbesondere der Geschwindigkeit, angesteuert werden. Wird beispielsweise eine überhöhte Geschwindigkeit detektiert, kann die Steuereinheit die Beleuchtungseinheit auslösen (Blitzlicht) und ein Bild und/oder Ton aufzeichnen (z.B. über eine Kamera und/oder Mikrofon). Die Transportbox kann eine Kommunikationseinheit (Sender und/oder Empfänger, z.B. [verschlüsselt] über elektromagnetische Wellen und/oder Polizeifunk) aufweisen, welche über eine Datenverbindung mit der Steuereinheit verbunden ist. Dadurch kann von extern und/oder außerhalb eine Kommunikation mit der Steuereinheit ermöglicht werden. So kann beispielsweise auf (Live-)Aufzeichnungen von Bild und/oder Ton, welche insbesondere von einer Kamera erfasst werden, zugegriffen werden. Es kann auch vorgesehen sein, dass dadurch die Position und/oder Ausrichtung der Transportbox zumindest teilweise verändert wird, beispielsweise durch eine Drehung des Stativs und/oder des Oberteils relativ zu dem Unterteil. Es kann beispielsweise auch vorgesehen sein, dass dabei der (oder die) Deckel verschlossen werden, indem der Steuereinheit über die Kommunikationseinheit ein entsprechendes Stellsignal übermittelt wird. Die Transportbox kann eine Alarmanlage aufweisen, welche für ein Ausgeben von akustischen und/oder visuellen (z.B. Lichtblitze der Beleuchtungseinheit) Warnsignalen eingerichtet ist, beispielsweise um einen Manipulationsversuch und/oder eine Krafteinwirkung (welche über Beschleunigungssensoren messbar sein kann) erkennbar zu machen. Die Alarmanlage kann mit der Steuereinheit über eine Datenverbindung verbunden sein und von dieser betrieben werden. Die Transportbox kann eine (mit der Steuereinheit datenkommunizierend verbundene) GPS-Einheit aufweisen, welche insbesondere für eine Lokalisation und/oder eine Standortbestimmung eingerichtet sein kann. Es kann auch vorgesehen sein, dass die Transportbox einen Messsensor aufweist, welcher für eine Detektion (einer Konzentration) von CO2 und/oder NOx (Stickoxiden) eingerichtet sein kann. Dadurch kann die Transportbox (zusätzlich) die Sicherheit erhöhen, indem (über die Steuereinheit) Informationen (Warnungen) kommuniziert werden können, z.B. an eine Polizeileitstelle.

Die obenstehende Aufgabe wird ferner gelöst durch ein erfindungsgemäßes Transportfahrrad umfassend:
- eine Transportbox gemäß dem ersten Aspekt (siehe oben),
- eine Gegenbefestigungsvorrichtung, an welcher die Transportbox, insbesondere über die Befestigungsvorrichtung der Transportbox, anordenbar ist.

Beispielsweise kann das (elektrisch betriebene) Transportfahrrad zumindest zwei, bevorzugt drei Räder, besonders bevorzugt vier Räder aufweisen. Dabei kann die Transportbox zwischen zwei (links und rechts angeordneten) hinteren Rädern, insbesondere in einem (durch den Rahmen des Fahrrads begrenzten bzw. definierten) Laderaum des Transportfahrrads, angeordnet werden. Dort kann die Transportbox über ihre Befestigungsvorrichtung an und/oder durch die Gegenbefestigungsvorrichtung des Transportfahrrads befestigt werden. Die Gegenbefestigungsvorrichtung kann dafür eingerichtet sein, mit der Befestigungsvorrichtung in Eingriff gebracht zu werden und/oder in diese einzugreifen, beispielsweise über eine Haken/Stift-Kombination. Alternativ oder zusätzlich kann die Gegenbefestigungsvorrichtung einen oder zwei Hubgabel-Zinken aufweisen und insbesondere die Befestigungsvorrichtung eine (komplementär) ausgebildete Schiene (z.B. an der Unterseite der Transportbox). Die Gegenbefestigungsvorrichtung kann dabei eine Hebeeinheit aufweisen, welche die Transportbox für den Transport anhebt. Die Hebeeinheit kann dabei einen Hebel und/oder einen (Elektro-)Motor aufweisen, welcher ein Anheben und/oder Absenken ermöglichen kann. Dadurch kann die Bodenfreiheit des Transportfahrrads und/oder die Reibung optimiert werden. Zudem kann dadurch die Sicherheit und/oder der Verschleiß optimiert werden.

Damit ergeben sich in Bezug auf ein erfindungsgemäßes Transportfahrrad die gleichen Vorteile, wie sie bereits in Bezug auf eine erfindungsgemäße Transportbox beschrieben worden sind.

Es kann im Rahmen der Erfindung vorgesehen sein, dass die Gegenbefestigungsvorrichtung dazu eingerichtet, ist die Transportbox reversibel lösbar an dem Transportfahrrad zu befestigen, insbesondere über die Befestigungsvorrichtung.

Dadurch kann die Transportbox mehrfach und/oder wiederholt auf- und/oder abgeladen werden. Weiterhin kann dadurch das Transportfahrrad unterschiedliche (baugleiche) Transportboxen transportieren, insbesondere alternierend und/oder nacheinander. So kann ein (bzw. wenige) Transportfahrrad (bzw. Transportfahrräder) ausreichend sein, um mehrere (viele) Transportboxen, insbesondere abwechselnd, zu transportieren. Bevorzugt sind die Anschlussmaße und Abmessungen der Bodenplatte der Transportbox und der Gegenbefestigungsvorrichtung mit Hubgabel-Zinken nach European Pallet Association (EPAL) Maßen genormt ausgeführt. Es kann vorgesehen sein, dass die Transportbox werkzeuglos an dem Transportfahrrad befestigt und/oder gelöst werden kann. Dies kann ein schnelles Abladen und/oder Aufladen ermöglichen. Die Gegenbefestigungsvorrichtung und/oder Befestigungsvorrichtung kann dabei einen (oder mehrere Verriegelungsmittel aufweisen, um ein reversibel lösbares Befestigen und/der eine erhöhte Sicherheit bereitzustellen. Es kann vorgesehen sein, dass die Gegenbefestigungsvorrichtung und/oder Befestigungsvorrichtung werkzeuglos betätigbar sind, beispielsweise durch einen Schnellspanner und/oder eine Schraube mit Rändelmutter. Weiterhin kann die Gegenbefestigungsvorrichtung und/oder Befestigungsvorrichtung ein Verschließmittel aufweisen, welches (einerseits) für eine verliersichere Befestigung der Transportbox an dem Transportfahrrad eingerichtet ist und/oder (andererseits) einen Diebstahl der Transportbox verhindert (beispielsweise, wenn das Transportfahrrad abgestellt ist).

Die obenstehende Aufgabe wird ferner gelöst durch ein erfindungsgemäßes Verfahren zur Überwachung von Verkehrsszenen und/oder zur Sicherheitsüberwachung, aufweisend:
- Bereitstellen eines Transportfahrrads gemäß dem zweiten Aspekt mit einer Transportbox gemäß dem ersten Aspekt,
- Positionieren des Transportfahrrads an einem vordefinierten (Ziel-)Standort,
- Messen von zumindest einem Parameter, welcher spezifisch ist für ein überwachtes Objekt.

Das Positionieren kann dabei ein Fahren zu dem Standort aufweisen. Dort kann die Transportbox abgesetzt werden, insbesondere über die Gegenbefestigungsvorrichtung. Das Positionieren kann weiterhin ein Ausrichten und/oder Austarieren der Transportbox umfassen. Zudem können der oder die (oben beschriebenen) Deckel geöffnet und/oder geschlossen werden. Die Steuereinheit kann dabei die Transportbox in eine Messkonfiguration versetzen, welche für ein Messen des zumindest einen Parameters eingerichtet sein kann. Die Transportbox kann weiterhin zumindest teilweise gedreht, verschwenkt und/oder in der Höhe verstellt werden (siehe oben). Es ist zudem denkbar, dass ein Messen in unterschiedliche Richtungen (z.B. senkrecht zu einer Vertikalen durch Drehung) ermöglicht wird, beispielsweise um erst in einer ersten Richtung und anschließend in einer (um 180° gedrehten) zweiten Richtung ein Messen zu ermöglichen.

Es kann vorgesehen sein, dass die Transportbox dazu eingerichtet ist, auch während eines Transportierens und/oder Fahrens (mit dem Transportfahrrad) ein Messen und/oder ein Aufzeichnen von Bild und/oder Tonmaterial bereitzustellen. Demnach können beispielsweise Daten über bestimmte Transportwege und/oder den derzeitigen Zustand der Umgebung (z.B. Fahrzeugdichte, Personenanzahl) bereitgestellt werden.

Damit ergeben sich in Bezug auf ein erfindungsgemäßes Verfahren die gleichen Vorteile, wie sie bereits in Bezug auf eine erfindungsgemäße Transportbox und/oder ein erfindungsgemäßes Transportfahrrad beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigen schematisch beispielhaft
- Figur 1: eine Transportbox,
- Figur 2: eine Transportbox,
- Figur 3: eine Transportbox,
- Figur 4: ein Transportfahrrad und
- Figur 5: ein Verfahren.

In den Figuren werden für die gleichen technischen Merkmale, auch von unterschiedlichen Ausführungsbeispielen, die identischen Bezugszeichen verwendet.

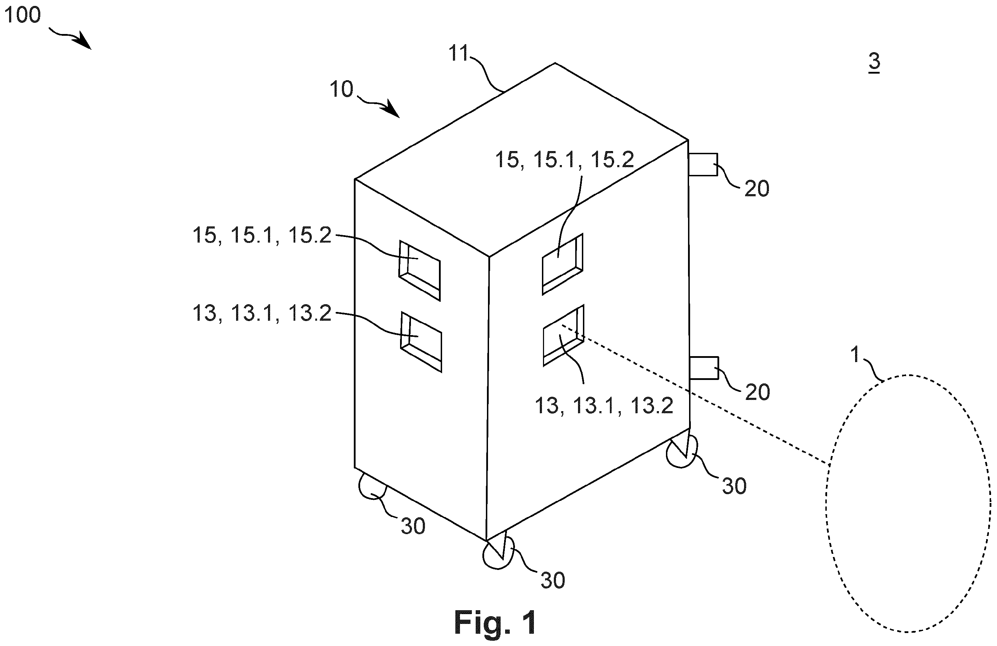

Fig. 1 zeigt eine Transportbox 100 zur Überwachung von Verkehrsszenen und/oder zur Sicherheitsüberwachung, aufweisend:
- eine Befestigungsvorrichtung 20, über welche die Transportbox 100 an einem Transportfahrrad 200 anordenbar ist,
- ein Gehäuse 10 umfassend zumindest eine Messeinheit 12, 12.1, 12.2, welche eingerichtet ist zum Messen 130 zumindest eines Parameters, welcher spezifisch ist für ein überwachtes Objekt 1,
- zumindest drei Standfüße 30, durch welche die Transportbox 100 auf einem darunterliegenden Boden 2 abstützbar ist, wobei die Standfüße 30 an dem Gehäuse 10 angeordnet sind.

Im Rahmen der Erfindung kann es von Vorteil sein, dass die Befestigungsvorrichtung 20 dazu eingerichtet ist, die Transportbox 100 reversibel lösbar an einem Transportfahrrad 200 zu befestigen.

Im Rahmen der Erfindung ist es denkbar, dass das Gehäuse 10 einen Rahmen 11 aufweist, in dessen Innenraum die zumindest eine Messeinheit 12, 12.1, 12.2 angeordnet ist.

Es kann im Rahmen der Erfindung vorgesehen sein, dass das Gehäuse 10, insbesondere der Rahmen 11, zumindest eine Ausnehmung 13, 13.1, 13.2 für die zumindest eine Messeinheit 12, 12.1, 12.2 aufweist, wobei die Ausnehmung 13, 13.1, 13.2 der zumindest einen Messeinheit 12, 12.1, 12.2 ein Messen 130 des zumindest einen Parameters durch die Ausnehmung 13, 13.1, 13.2 hindurch ermöglicht,
wobei vorzugsweise das Gehäuse 10, insbesondere der Rahmen 11, zumindest zwei einander gegenüberliegende Ausnehmungen 13.1, 13.2 aufweist für jeweils zumindest eine Messeinheit 12.1, 12.2, wobei die Ausnehmungen 13.1, 13.2 der jeweiligen Messeinheit 12.1, 12.2 ein Messen 130 des zumindest einen Parameters durch die Ausnehmung 13.1, 13.2 hindurch ermöglichen.

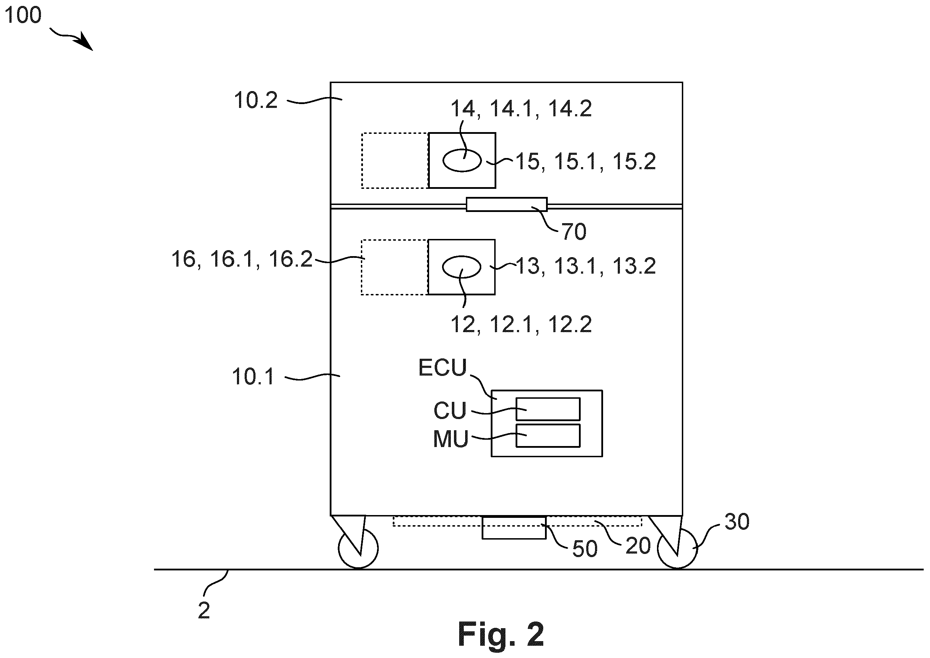

Fig. 2 zeigt, dass die Ausnehmung 13, 13.1, 13.2, insbesondere die Ausnehmungen 13.1, 13.2, einen Deckel 16, insbesondere jeweils einen Deckel 16.1, 16.2, aufweisen kann.

Auch ist es denkbar, dass das Gehäuse 10, insbesondere der Rahmen 11, eine Beleuchtungseinheit 14 und eine entsprechende Beleuchtungsausnehmung 15 für die Beleuchtungseinheit 14 aufweist, durch welche von der Beleuchtungseinheit 14 emittiertes Blitzlicht das Gehäuse 10 verlassen kann, wobei insbesondere zwei einander gegenüberliegende Beleuchtungseinheiten 14.1, 14.2 mit jeweils einer entsprechenden Beleuchtungsausnehmung 15.1, 15.2 vorgesehen sind, wobei vorzugsweise die Beleuchtungsausnehmung 15, 15.1, 15.2 einen Beleuchtungsdeckel aufweist.

Ferner kann es im Rahmen der Erfindung vorgesehen sein, dass das Gehäuse 10, insbesondere der Rahmen 11, eine Fixiervorrichtung 50 (vgl. Fig. 2), insbesondere einen Greifer und/oder einen Bohrer, aufweist, durch welche die Transportbox 100 an einem Standort, insbesondere an einem darunterliegenden Boden 2 und/oder einem benachbarten Gegenstand, reversibel lösbar fixierbar ist.

Ferner ist es vorstellbar, dass das Gehäuse 10, insbesondere der Rahmen 11, einen unteren Gehäuseteil 10.1 und einen oberen Gehäuseteil 10.2 aufweist, wobei der obere Gehäuseteil 10.2 gegenüber dem unteren Gehäuseteil 10.1 über eine Verstellvorrichtung 70 verstellbar, insbesondere beabstandbar, drehbar und/oder schwenkbar und/oder höhenverstellbar, ausgebildet ist, wobei insbesondere der obere Gehäuseteil 10.2 aufweist:
- eine Beleuchtungseinheit 14, 14.1, 14.2,
- zumindest eine Messeinheit 12, 12.1, 12.2 und/oder
- eine Kamera 17, welche zum Überwachen einer Umgebung 3 der Transportbox 100 eingerichtet ist.

Im Rahmen der Erfindung ist es denkbar, dass die Transportbox 100 eine Steuereinheit ECU aufweist, welche eingerichtet ist zum Betreiben der Befestigungsvorrichtung 20 und der zumindest einen Messeinheit 12, 12.1, 12.2, wobei insbesondere die Steuereinheit ECU eingerichtet ist zum Betreiben:
- der Beleuchtungseinheit 14, 14.1, 14.2,
- eines zum Lösen und/oder Fixieren der Außenverkleidung 40 eingerichteten Verschlussmechanismus,
- der Fixiervorrichtung 50,
- der Positioniervorrichtung 60,
- der Verstellvorrichtung 70,
- des Stativs 80 und/oder
- der Kamera 17.

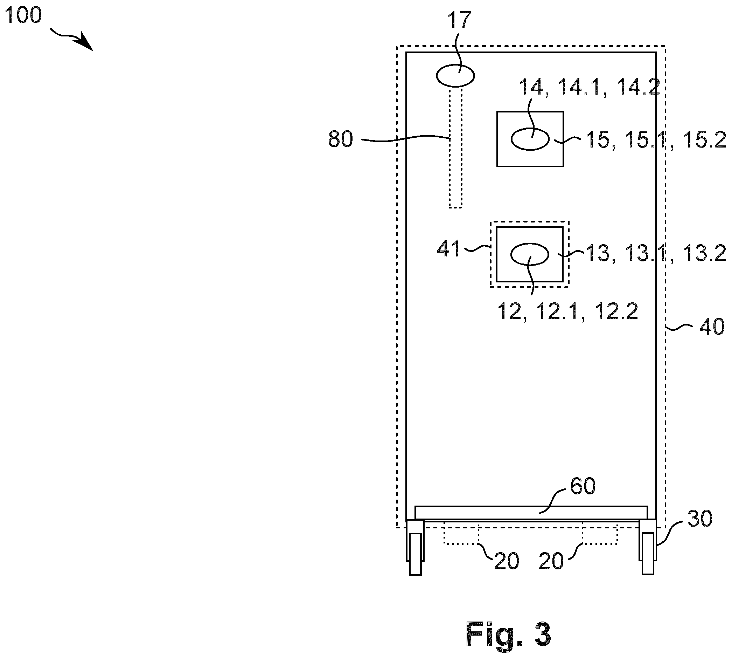

Fig. 3 zeigt beispielhaft, dass das Gehäuse 10, insbesondere der Rahmen 11, eine reversibel lösbare Außenverkleidung 40 aufweisen kann, welche insbesondere zumindest eine Verkleidungsausnehmung 41 aufweist, die deckungsgleich zu der zumindest einen Ausnehmung 13, 13.1, 13.2 ausgebildet ist.

Fig. 3 zeigt beispielhaft, dass das Gehäuse 10, insbesondere der Rahmen 11, zumindest eine Positioniervorrichtung 60 aufweisen kann, welche, insbesondere über zumindest einen der zumindest drei Standfüße 30, für eine Höheneinstellung und/oder ein Austarieren der Transportbox 100 eingerichtet ist.

Im Rahmen der Erfindung kann es von Vorteil sein, dass das Gehäuse 10, insbesondere ein oberer Gehäuseteil 10.2, ein, insbesondere ausfahrbares, Stativ 80 aufweist, welches relativ zu dem Gehäuse 10 verstellbar, insbesondere beabstandbar, drehbar und/oder schwenkbar und/oder höhenverstellbar, positionierbar ist, wobei insbesondere das Stativ 80 aufweist:
- eine Beleuchtungseinheit 14, 14.1, 14.2,
- zumindest eine Messeinheit 12, 12.1, 12.2 und/oder
- eine Kamera 17, welche zum Überwachen einer Umgebung 3 der Transportbox 100 eingerichtet ist.

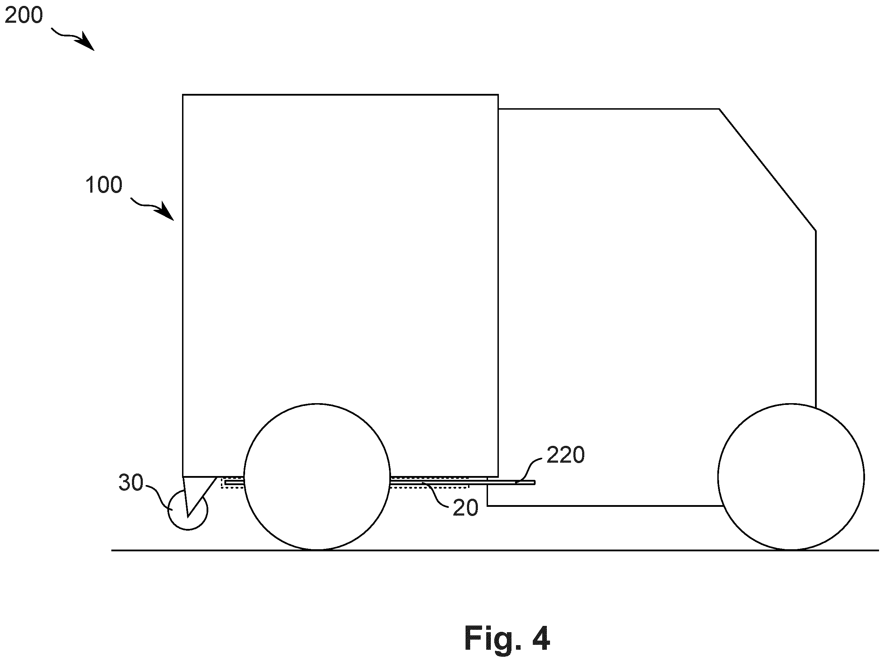

Fig. 4 zeigt beispielhaft ein Transportfahrrad 200 umfassend:
- eine Transportbox 100 gemäß dem ersten Aspekt und/oder nach einer der Fig. 1 bis 4,
- eine Gegenbefestigungsvorrichtung 220, an welcher die Transportbox 100, insbesondere über die Befestigungsvorrichtung 20 der Transportbox 100, anordenbar ist.

Es kann im Rahmen der Erfindung vorgesehen sein, dass die Gegenbefestigungsvorrichtung 220 dazu eingerichtet ist, die Transportbox 100 reversibel lösbar an dem Transportfahrrad 200 zu befestigen, insbesondere über die Befestigungsvorrichtung 20.

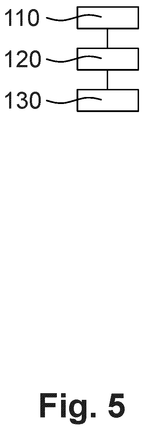

Fig. 5 zeigt beispielhaft ein Verfahren zur Überwachung von Verkehrsszenen und/oder zur Sicherheitsüberwachung, aufweisend:
- Bereitstellen 110 eines Transportfahrrads 200 gemäß dem zweiten Aspekt und/oder gemäß Fig. 4 mit einer Transportbox 100 gemäß dem ersten Aspekt und/oder nach einer der Fign. 1 bis 3,
- Positionieren 120 des Transportfahrrads 200 an einem vordefinierten Standort, z.B. durch Anfahren des Standorts mit dem Transportfahrrad 200 und anschließendes Abladen der Transportbox 100,
- Messen 130 von zumindest einem Parameter, welcher spezifisch ist für ein überwachtes Objekt 1.

### Bezugszeichenliste

- 1: Objekt
- 2: Boden
- 3: Umgebung
- 10: Gehäuse
- 10.1: unterer Gehäuseteil
- 10.2: oberer Gehäuseteil
- 11: Rahmen
- 12, 12.1, 12.2: Messeinheit
- 13, 13.1, 13.2: Ausnehmung
- 14, 14.1, 14.2: Beleuchtungseinheit
- 15, 15.1, 15.2: Beleuchtungsausnehmung
- 16, 16.1, 16.2: Deckel
- 17: Kamera
- 20: Befestigungsvorrichtung
- 30: Standfüße
- 40: Außenverkleidung
- 41: Verkleidungsausnehmung
- 50: Fixiervorrichtung
- 60: Positioniervorrichtung
- 70: Verstellvorrichtung
- 80: Stativ
- 100: Transportbox
- 110: Bereitstellen eines Transportfahrrads mit einer Transportbox
- 120: Positionieren
- 130: Messen
- 200: Transportfahrrad
- 220: Gegenbefestigungsvorrichtung
- ECU: Steuereinheit

## Patentansprüche

1. Transportbox (100) zur Überwachung von Verkehrsszenen und/oder zur Sicherheitsüberwachung, aufweisend:
- eine Befestigungsvorrichtung (20), über welche die Transportbox (100) an einem Transportfahrrad (200) anordenbar ist,
- ein Gehäuse (10), umfassend zumindest eine Messeinheit (12, 12.1, 12.2), welche eingerichtet ist zum Messen (130) zumindest eines Parameters, welcher spezifisch ist für ein überwachtes Objekt (1),
- zumindest ein, bevorzugt drei Standfüße (30), durch welche die Transportbox (100) auf einem darunterliegenden Boden (2) abstützbar ist, wobei die Standfüße (30) an dem Gehäuse (10) angeordnet sind.

2. Transportbox (100) nach Anspruch 1,
**dadurch gekennzeichnet,**
**dass** die Befestigungsvorrichtung (20) dazu eingerichtet ist, die Transportbox (100) reversibel lösbar an einem Transportfahrrad (200) zu befestigen.

3. Transportbox (100) nach Anspruch 1 oder 2,
**dadurch gekennzeichnet,**
**dass** das Gehäuse (10) einen Rahmen (11) aufweist, in dessen Innenraum die zumindest eine Messeinheit (12, 12.1, 12.2) angeordnet ist.

4. Transportbox (100) nach einem der vorhergehenden Ansprüche,
**dadurch gekennzeichnet,**
**dass** das Gehäuse (10), insbesondere der Rahmen (11), zumindest eine Ausnehmung (13, 13.1, 13.2) für die zumindest eine Messeinheit (12, 12.1, 12.2) aufweist, wobei die Ausnehmung (13, 13.1, 13.2) der zumindest einen Messeinheit (12, 12.1, 12.2) ein Messen (130) des zumindest einen Parameters durch die Ausnehmung (13, 13.1, 13.2) hindurch ermöglicht,
wobei vorzugsweise das Gehäuse (10), insbesondere der Rahmen (11), zumindest zwei einander gegenüberliegende Ausnehmungen (13.1, 13.2) aufweist für jeweils zumindest eine Messeinheit (12, 12.1, 12.2), wobei die Ausnehmungen (13.1, 13.2) der jeweiligen Messeinheit (12, 12.1, 12.2) ein Messen des zumindest einen Parameters durch die Ausnehmung (13.1, 13.2) hindurch ermöglichen.

5. Transportbox (100) nach dem vorhergehenden Anspruch,
**dadurch gekennzeichnet,**
**dass** die Ausnehmung (13, 13.1, 13.2), insbesondere die Ausnehmungen (13.1, 13.2), einen Deckel (16), insbesondere jeweils einen Deckel (16.1, 16.2), aufweist.

6. Transportbox (100) nach einem der vorhergehenden Ansprüche,
**dadurch gekennzeichnet,**
**dass** das Gehäuse (10), insbesondere der Rahmen (11), eine Beleuchtungseinheit (14) und eine entsprechende Beleuchtungsausnehmung (15) für die Beleuchtungseinheit (14) aufweist, durch welche von der Beleuchtungseinheit (14) emittiertes Blitzlicht das Gehäuse (10) verlassen kann, wobei insbesondere zwei einander gegenüberliegende Beleuchtungseinheiten (14.1, 14.2) mit jeweils einer entsprechenden Beleuchtungsausnehmung (15.1, 15.2) vorgesehen sind, wobei vorzugsweise die Beleuchtungsausnehmung (15, 15.1, 15.2) einen Beleuchtungsdeckel aufweist.

7. Transportbox (100) nach einem der vorhergehenden Ansprüche,
**dadurch gekennzeichnet,**
**dass** das Gehäuse (10), insbesondere der Rahmen (11), eine reversibel lösbare Außenverkleidung (40) aufweist, welche insbesondere zumindest eine Verkleidungsausnehmung (41) aufweist, die deckungsgleich zu der zumindest einen Ausnehmung (13, 13.1, 13.2) ausgebildet ist.

8. Transportbox (100) nach einem der vorhergehenden Ansprüche,
**dadurch gekennzeichnet,**
**dass** das Gehäuse (10), insbesondere der Rahmen (11), eine Fixiervorrichtung (50), insbesondere einen Greifer und/oder einen Bohrer, aufweist, durch welche die Transportbox (100) an einem Standort, insbesondere an einem darunterliegenden Boden (2) und/oder einem benachbarten Gegenstand, reversibel lösbar fixierbar ist.

9. Transportbox (100) nach einem der vorhergehenden Ansprüche,
**dadurch gekennzeichnet,**
**dass** das Gehäuse (10), insbesondere der Rahmen (11), zumindest eine Positioniervorrichtung (60) aufweist, welche, insbesondere über zumindest einen der zumindest drei Standfüße (30), für eine Höheneinstellung und/oder ein Austarieren der Transportbox (100) eingerichtet ist.

10. Transportbox (100) nach einem der vorhergehenden Ansprüche,
**dadurch gekennzeichnet,**
**dass** das Gehäuse (10), insbesondere der Rahmen (11), einen unteren Gehäuseteil (10.1) und einen oberen Gehäuseteil (10.2) aufweist, wobei der obere Gehäuseteil (10.2) gegenüber dem unteren Gehäuseteil (10.1) über eine Verstellvorrichtung (70) verstellbar, insbesondere beabstandbar, drehbar und/oder schwenkbar und/oder höhenverstellbar, ausgebildet ist, wobei insbesondere der obere Gehäuseteil (10.2) aufweist:
- eine Beleuchtungseinheit (14, 14.1, 14.2),
- zumindest eine Messeinheit (12, 12.1, 12.2) und/oder
- eine Kamera (17), welche zum Überwachen einer Umgebung (3) der Transportbox (100) eingerichtet ist.

11. Transportbox (100) nach einem der vorhergehenden Ansprüche,
**dadurch gekennzeichnet,**
**dass** das Gehäuse (10), insbesondere ein oberer Gehäuseteil (10.2), ein, insbesondere ausfahrbares, Stativ (80) aufweist, welches relativ zu dem Gehäuse (10) verstellbar, insbesondere beabstandbar, drehbar und/oder schwenkbar und/oder höhenverstellbar, positionierbar ist, wobei insbesondere das Stativ (80) aufweist:
- eine Beleuchtungseinheit (14, 14.1, 14.2),
- zumindest eine Messeinheit (12, 12.1, 12.2) und/oder
- eine Kamera (17), welche zum Überwachen einer Umgebung (3) der Transportbox (100) eingerichtet ist.

12. Transportbox (100) nach einem der vorhergehenden Ansprüche,
**dadurch gekennzeichnet,**
**dass** die Transportbox (100) eine Steuereinheit (ECU) aufweist, welche eingerichtet ist zum Betreiben der Befestigungsvorrichtung (20) und der zumindest einen Messeinheit (12, 12.1, 12.2), wobei insbesondere die Steuereinheit (ECU) eingerichtet ist zum Betreiben:
- der Beleuchtungseinheit (14, 14.1, 14.2),
- eines zum Lösen und/oder Fixieren der Außenverkleidung (40) eingerichteten Verschlussmechanismus,
- der Fixiervorrichtung (50),
- der Positioniervorrichtung (60),
- der Verstellvorrichtung (70),
- des Stativs (80) und/oder
- der Kamera (17).

13. Transportfahrrad (200), umfassend:
- eine Transportbox (100) nach einem der vorhergehenden Ansprüche,
- eine Gegenbefestigungsvorrichtung (220), an welcher die Transportbox (100), insbesondere über die Befestigungsvorrichtung (20) der Transportbox (100), anordenbar ist.

14. Transportfahrrad (200) nach dem vorhergehenden Anspruch,
**dadurch gekennzeichnet,**
**dass** die Gegenbefestigungsvorrichtung (220) dazu eingerichtet ist, die Transportbox (100) reversibel lösbar an dem Transportfahrrad (200) zu befestigen, insbesondere über die Befestigungsvorrichtung (20).

15. Verfahren zur Überwachung von Verkehrsszenen und/oder zur Sicherheitsüberwachung, aufweisend:
- Bereitstellen (110) eines Transportfahrrads (200) nach einem der Ansprüche 13 oder 14 mit einer Transportbox (100) nach einem der Ansprüche 1 bis 12,
- Positionieren (120) des Transportfahrrads (200) an einem vordefinierten Standort,
- Messen (130) von zumindest einem Parameter, welcher spezifisch ist für ein überwachtes Objekt (1).
